# EUROPEAN PATENT APPLICATION

(11) **EP 4 002 158 A1**
(43) Date of publication of application: **25.05.2022**
(21) Application number: 21199963.6
(22) Date of filing: 29.09.2021
(51) Int. Cl.: G06F 16/51, G06F 16/16

(54) **COMPUTING DEVICE FOR HANDLING MULTIMEDIA FILES AND METHOD THEREOF**

(30) Priority: 11.11.2020 TR 202018031
(71) Applicant: Arçelik Anonim Sirketi, 34445 Istanbul (TR)
(72) Inventor: LIN, Norman, 34445 ISTANBUL (TR); GOODSPEED, Chiu, 34445 ISTANBUL (TR); CHEN, Louis, 34445 ISTANBUL (TR)

(57) **Abstract**

The present invention relates to a computing device (1) and a method of handling multimedia files for improving system performance. The computing device (1) comprises processing means (2) and is arranged to receive and store multimedia files in a data storage means (S).

## Description

The present invention relates to a computing device for handling multimedia files and a method thereof for improving system performance.

In devices where multimedia files such as pictures and videos are being processed and stored, handling of these files may significantly affect system performance. These devices read metadata and file information of newly created or downloaded files and handle storage of files accordingly. Especially in systems where plurality of multimedia files should be handled on a regular basis, services such as media scanning can be triggered every time a multimedia file is saved. A typical example is a device running Android operating system and employing a memory card such as a Secure Digital (SD) card as data storage means for storing multimedia files. In such a system, for each action of adding a multimedia file to SD card, system triggers media scanning which usually takes several minutes. For a system frequently receiving and storing multimedia files, this leads to media scanner being triggered very often. This leads to system being continuously busy with running the media scanner and thus performance of the system is adversely affected. Therefore, there is need for more efficient ways of handling multimedia files in order to improve system performance.

In the state of the art, Chinese patent application CN103970836A discloses a method for accelerating multimedia scanning process. According to this method, files which do not need scanning are pre-scanned and filtered in advance in order to reduce scanning time.

In another example of state of the art, Chinese patent application CN102970420A discloses a filtering method to speed up multimedia scanning. If a folder is determined to be a cached folder, a "nomedia" file is added to the folder, causing the system skip scanning the cached folder.

The aim of the present invention is realization of a computing device and method for handling multimedia files in a more efficient manner. More specifically, a purpose of the invention is providing a computing device and method which minimize detrimental effect of multimedia scanning on system performance. The invention aims to provide a solution preventing system performance issues related to multimedia scanning, without compromising multimedia storing functionality of the system. Another purpose of the invention is to overcome the aforementioned problems without requiring additional hardware or calculating power from the computing device.

The computing device realized in order to attain the aim of the present invention, defined in claim 1 and the respective claims thereof, comprises processing means and is arranged to receive and store one or more multimedia file in a data storage means.

In the preferred embodiment of the present invention, the processing means is configured to change multimedia filename extension of said one or more multimedia file to a non-multimedia filename extension, and save the one or more modified multimedia file in the data storage means. Accordingly, the modified multimedia file (i.e. multimedia file with a non-multimedia filename extension) will not trigger multimedia-specific services, such as media scanning, in the system, when saved in the data storage means.

According to an embodiment of the invention, the processing means is further configured to receive a command to open saved multimedia file, and change non-multimedia filename extension of said saved multimedia file back to a multimedia filename extension.

The processing means may be further configured to determine whether a received file has a multimedia filename extension or not. In an embodiment, the processing means is configured to determine whether the received file has a multimedia filename extension by searching the filename extension of the received file in a list of multimedia filename extensions.

Non-multimedia filename extension may be any filename extension not comprised in a predetermined list of multimedia filename extensions.

In an embodiment of the invention, the computing device is an Android device (i.e. a device configured to run Android operating system) and the data storage means is a memory card, for example an SD card.

According to an aspect of the present invention, there is provided an automatic license-plate recognition system comprising one or more cameras for capturing images and a computing device as described herein. Received multimedia files may comprise images captured by said one or more cameras.

Said images may comprise at least one still image with a filename extension of .jpg, .jpeg, or .png, and/or at least one video with a filename extension of .mov, .mp4, .m4a, .m4v, .mpg, .mpeg, .wmv, .avi, .flv, .3gp, .3gpp, .3g2, or .3gp2. The computing device may a back-end server.

According to another aspect of the present invention, there is provided a method of handling multimedia files by a computing device or by an automatic license-plate recognition system as described herein. In a preferred embodiment, the method comprises receiving one or more multimedia file, changing multimedia filename extension of said one or more multimedia file to a non-multimedia filename extension, and saving the modified one or more multimedia file in the data storage means. The method may further comprise receiving a command to open saved multimedia file, and changing non-multimedia filename extension of said saved multimedia file back to a multimedia filename extension.

The method according to embodiments of the present invention may be implemented at least partially using software, e.g. computer programs. In other words, the present invention is preferably a computer implemented invention, and any of the steps described in relation to any of the aspects or embodiments of the invention may be carried out under the control of a set of one or more processors. The present invention thus also extends to a computer program comprising computer readable instructions executable to perform, or to cause a device to perform, a method according to any of the aspects or embodiments of the invention.

Thus, in another aspect of the present invention, there is provided computer software operable, when executed on the computing device, to cause one or more processors to perform a method as described herein. The computer software may be stored on a non-transitory computer-readable medium.

The computing device and the method of handling multimedia files realized in order to attain the aim of the present invention is illustrated in the attached figures, where:
Figure 1 is the schematic view of a computing device according to an embodiment of the invention,
Figure 2 is a schematic view of an automatic license-plate recognition system comprising the computing device, according to an embodiment of the invention,
Figure 3 is a flow diagram of method of handling multimedia files according to an embodiment of the invention.

The elements illustrated in the figures are numbered as follows:
1. Computing device
2. Processing means

### S. Data storage means

### C. Camera

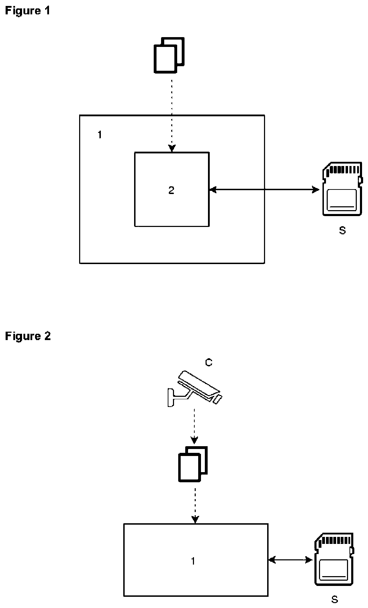

The computing device (1) comprises processing means (2) and is arranged to receive and store one or more multimedia file in the data storage means (S). The computing device (1) may receive multimedia files from an external device and/or obtain multimedia files newly created on the computing device (1). The data storage means (S) is preferably a non-volatile memory. The data storage means (S) can be a removable storage device, for example a memory card. The data storage means (S) may be comprised in, removably inserted in, or externally connected to the computing device (1). (Figure 1)

In a preferred embodiment, the processing means (2) is configured to change multimedia filename extension of said one or more multimedia file to a non-multimedia filename extension. In doing so, the processing means (2) changes the defined type of the file from a file type conventionally associated with multimedia files to another file type not associated with multimedia files. Thus, while the received multimedia files originally having a multimedia filename extension are recognized by the computing device (1) as multimedia files, modified multimedia files whose filename extension is changed to a non-multimedia filename extension are not recognized as multimedia files. The processing means (2) is also configured to save the one or more modified multimedia file in the data storage means (S). As a result of the file type modification, received multimedia files are treated by the system of the computing device (1) as non-multimedia files and services associated exclusively with multimedia, such as automatic media scanning, are not triggered.

The processing means (2) may additionally be configured to receive a command to open saved multimedia file, and, in response to receiving the open command, change non-multimedia filename extension of said saved multimedia file back to a multimedia filename extension. The multimedia filename extension to which the saved file is reverted is preferably the filename extension the file had when received by the computing device. Alternatively, when a command to open a saved multimedia file is received, the computing device (1) may prompt a notification, for example via a display means (not shown in figures) comprised in or connected to the computing device (1), for a user to select a tool and/or a suitable new filename extension to open the file in question.

In an embodiment, the processing means (2) is further configured to determine whether a received file has a multimedia filename extension or not and modify only those with multimedia file extensions. This allows saving received multimedia files already having non-multimedia filename extensions into data storage means (S) without further modification. This embodiment is particularly advantageous in cases where similar additional computing devices (1) are employed as external devices sending multimedia files with modified filename extensions. Accordingly, system performance can be further improved by preventing unnecessary use of system resources.

The processing means (2) may be configured to determine whether the received file has a multimedia filename extension by searching the filename extension of the received file in a list of multimedia filename extensions. Said list can be stored in the computing device (1) or can be stored externally, for example on a remote device accessible by the computing device (1). The list can be modified and updated by an operator and/or a user of the computing device (1). The list may comprise the following multimedia filename extensions per video, audio, and image files. Video: .mov, .mp4, .m4a, .m4v, .mpg, .mpeg, .wmv, .avi, .flv, .3gp, .3gpp, .3g2, .3gp2; audio: .mp3; image: .jpg, .jpeg, .png.

The non-multimedia filename extension comprised by modified multimedia files can be any filename extension not comprised in a predetermined list of multimedia filename extensions. These non-multimedia filename extensions can be any filename extension complying with system requirements but not identifying a multimedia file. Thus, original multimedia files may be modified to include any valid filename extension not used for multimedia files or a randomly generated filename extension not listed as a multimedia filename extension.

The present invention is applicable to any computing device (1) configured to run an OS, wherein, in connection with a storage means, a multimedia-specific functionality is triggered when multimedia files are being saved. According to at least one embodiment, the computing device (1) is an Android device and the data storage means (S) is an SD card. In this embodiment, triggering of multimedia-specific services such as media scanning is prevented.

The computing device (1) may be comprised in an automatic license-plate recognition system comprising one or more cameras (C) for capturing images for purposes of vehicle and/or license plate identification. According to this embodiment, received multimedia files comprise images captured by said one or more cameras (C). (Figure 2) The automatic license-plate recognition system is preferably arranged as a back-end server for receiving images and one or more cameras (C) connected thereto. The computing device (1) may be employed as the back-end server connected to remote cameras (C). It is also possible to employ the computing device (1) at locations where cameras (C) are installed. Accordingly, the method of handling multimedia files according to present invention can be carried out locally and/or centrally by the automatic license-plate recognition system.

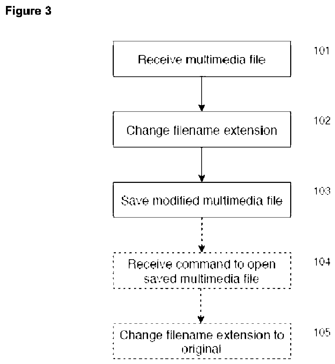

The method of automatically handling multimedia files by the computing device (1) comprises receiving (101) one or more multimedia file, changing (102) multimedia filename extension of said one or more multimedia file to a non-multimedia filename extension, and saving (103) the modified one or more multimedia file in the data storage means (S). (Figure 3) The method is preferably repeated for every multimedia file received by the computing device (1). The method may further comprise receiving a command, at the computing device (1), to open saved multimedia file, and changing, in response to receiving said command, non-multimedia filename extension of said saved multimedia file back to a multimedia filename extension.

With the computing device (1) and multimedia file handling method of the present invention, system functionality specific to saving multimedia files, such as triggering of media scanning in SD cards, can be avoided by a simple modification applied to multimedia files before saving them in the data storage means (S). Hence, system performance during storing newly created or received multimedia files is improved in a simple and effective manner.

## Claims

1. A computing device (1) comprising processing means (2), wherein the computing device (1) is arranged to receive and store one or more multimedia file in a data storage means (S); **characterised in that** the processing means (2) is configured to change multimedia filename extension of said one or more multimedia file to a non-multimedia filename extension, and save the one or more modified multimedia file in the data storage means (S).

2. A computing device (1) according to claim 1, wherein the processing means (2) is further configured to:
receive a command to open saved multimedia file, and
change non-multimedia filename extension of said saved multimedia file back to a multimedia filename extension.

3. A computing device (1) according to claim 1 or 2, wherein the processing means (2) is further configured to determine whether a received file has a multimedia filename extension or not.

4. A computing device (1) according to claim 3, wherein the processing means (2) is configured to determine whether the received file has a multimedia filename extension by searching the filename extension of the received file in a list of multimedia filename extensions.

5. A computing device (1) according to any one of preceding claims, wherein non-multimedia filename extension is any filename extension not comprised in a predetermined list of multimedia filename extensions.

6. A computing device (1) according to any one of preceding claims, wherein the computing device (1) is an Android device and the data storage means (S) is an SD card.

7. An automatic license-plate recognition system comprising one or more cameras (C) for capturing images and a computing device (1) according to any one of preceding claims, wherein received multimedia files comprise images captured by said one or more cameras (C).

8. An automatic license-plate recognition system according to claim 7, wherein said images comprise at least one still image with a filename extension of .jpg, .jpeg, or .png.

9. An automatic license-plate recognition system according to claim 7 or 8, wherein said images comprise at least one video with a filename extension of .mov, .mp4, .m4a, .m4v, .mpg, .mpeg, .wmv, .avi, .flv, .3gp, .3gpp, .3g2, or .3gp2.

10. An automatic license-plate recognition system according to any one of claims 7 to 9, wherein the computing device (1) is a back-end server.

11. A method of handling multimedia files by a computing device (1) according to any one of claims 1 to 6, or by an automatic license-plate recognition system according to any one of claims 7 to 10, wherein the method comprises:
receiving (101) one or more multimedia file,
changing (102) multimedia filename extension of said one or more multimedia file to a non-multimedia filename extension, and
saving (103) the modified one or more multimedia file in the data storage means (S).

12. A method according to claim 11, wherein the method further comprises:
receiving a command to open saved multimedia file, and
changing non-multimedia filename extension of said saved multimedia file back to a multimedia filename extension.

13. Computer software operable, when executed on a computing device (1) according to any one of claims 1 to 6, or on the computing device (1) of an automatic license-plate recognition system according to any one of claims 7 to 10, to cause one or more processors to perform a method according to claim 11 or 12.
